# EUROPÄISCHE PATENTANMELDUNG

(11) **EP 3 447 473 A2**
(43) Veröffentlichungstag der Anmeldung: **27.02.2019**
(21) Anmeldenummer: 18189537.6
(22) Anmeldetag: 17.08.2018
(51) Int. Cl.: G01N 15/14, G01N 15/10

(54) **PARTIKELSENSOR**

(30) Priorität: 23.08.2017 DE 102017119284
(71) Anmelder: Klotz, Markus, 75378 Bad Liebenzell (DE)
(72) Erfinder: Klotz, Markus, 75378 Bad Liebenzell (DE)
(74) Vertreter: DREISS Patentanwälte PartG mbB

(57) **Zusammenfassung**

Ein Partikelsensor (10) zur Detektion von Partikeln (12) in einem strömenden flüssigen oder gasförmigem Medium (13), mit einer Messzelle (14), die einen Strömungskanal (161) zur Durchführung des Mediums (13) mit einem zumindest teilweise transparenten Partikelmessabschnitt (20) aufweist, und einer Lichtquelle (22) zur Erzeugung eines gebündelten und sich parallel zu oder entlang einer optischen Achse (24) ausbreitenden Lichtstrahls zur Beleuchtung des Partikelmessabschnitts (20), ist im Hinblick darauf, mit einfachen konstruktiven Mitteln die Bestimmung von Größe, Anzahl und weiteren Eigenschaften von Partikeln zu ermöglichen, derart ausgestaltet und weitergebildet,
dass eine erste Detektoreinheit (26) zur Durchführung des Lichtabschattungs-Messverfahrens und eine zweite Detektoreinheit (28) zur Durchführung des Streulicht-Messverfahrens vorgesehen sind.

## Beschreibung

Die vorliegende Erfindung betrifft einen Partikelsensor zur Detektion von Partikeln in einem strömenden flüssigen oder gasförmigem Medium, mit einer Messzelle, die einen Strömungskanal zur Durchführung des Mediums mit einem zumindest teilweise transparenten Partikelmessabschnitt aufweist, und einer Lichtquelle zur Erzeugung eines gebündelten und sich parallel zu oder entlang einer optischen Achse ausbreitenden Lichtstrahls zur Beleuchtung des Partikelmessabschnitts.

Partikelsensoren sind aus dem Stand der Technik bekannt, bspw. aus DE 10 2007 013 356 A1. Darin ist ein

Partikelsensor für strömende flüssige oder gasförmige Medien beschrieben, mit dem Partikel optisch erfasst und gezählt werden können.

Allerdings besteht Raum für Optimierungen. So ist die Verwendung von Partikelsensoren auf die Zählung und Größenbestimmung von Partikeln begrenzt. Weitere Eigenschaften von erfassten Partikeln lassen sich nicht oder nur durch separate Messeinrichtungen ermitteln. Dies ist mit einem hohen Aufwand verbunden.

Der Erfindung liegt die Aufgabe zugrunde, mit einfachen konstruktiven Mitteln die Bestimmung von Größe, Anzahl und weiteren Eigenschaften von Partikeln zu ermöglichen. Dabei ist es wünschenswert, dass mit lediglich einem Partikelsensor weitere Eigenschaften von Partikeln, bspw. Partikelform oder Partikelart, bestimmt werden können.

Die Erfindung löst die voranstehende Aufgabe durch einen Partikelsensor mit den Merkmalen des Anspruchs 1. Danach zeichnet sich der Partikelsensor dadurch aus, dass eine erste Detektoreinheit zur Durchführung des
Lichtabschattungs- oder Lichtblockade-Messverfahrens (Lichtblockade-Detektor) und eine zweite Detektoreinheit zur Durchführung des Streulicht-Messverfahrens (Streulicht-Detektor) vorgesehen sind.

Eine solche Ausgestaltung hat den Vorteil, dass eine Kombination des Lichtabschattungs-Messverfahrens und des Streulicht-Messverfahrens mit nur einem Sensor ermöglicht ist. Hierzu sind die erste Detektoreinheit (Lichtblockade-Detektor) und die zweite Detektoreinheit (Streulicht-Detektor) in den Partikelsensor integriert. Durch die vorzugsweise gleichzeitige Erfassung des Lichtblockadesignals und des Streulichtsignals (Erfassung von Pulshöhe und/oder Pulsverlauf) können nicht nur die Größe und Anzahl der Partikel erfasst, sondern auch die Partikelform und die Partikelart (z.B. Latexpartikel, Bakterium, Luftblase, Öltropfen, Sandkorn) bestimmt werden. Auf diese Weise können weitere Informationen gewonnen oder die durch einen Detektor gewonnenen Informationen durch den jeweils anderen Detektor verifiziert werden. Der Streulicht-Detektor ist in der Lage, Partikel von einigen 100nm (Nanometer) bis ca. 50µm (Mikrometer) zu erfassen. Der Lichtblockade-Detektor ist in der Lage, Teilchen ab ca. 0,5 bis 0,8µm (abhängig von der Wellenlänge des Lasers) bis hin zu mehreren Millimetern zu erfassen. Die Begriffe "Lichtabschattung" und "Lichtblockade" werden synonym verwendet.

Der Lichtstrahl breitet sich von der Lichtquelle parallel zu oder entlang einer optischen Achse aus (Hauptabstrahlrichtung der Lichtquelle). Die optische Achse kann die Messzelle (Partikelmessabschnitt) schneiden. Der Lichtstrahl verläuft entlang eines Strahlengangs von der Lichtquelle durch die Messzelle (Partikelmessabschnitt) zu der ersten Detektoreinheit (Lichtblockade-Detektor). Befindet sich ein Partikel in der Messzelle (Partikelmessabschnitt), wird der Lichtstrahl aus Sicht der ersten Detektoreinheit abgeschattet (geringere Intensität des Lichtstrahls). Zudem entsteht durch den in der Messzelle befindlichen Partikel um den Partikel herum ein räumliches Streulicht. Das Streulicht weist über den Raumwinkel eine unterschiedliche Intensität auf, dessen Veranschaulichung "Streulichtkeule" genannt werden kann.

An der ersten Detektoreinheit kann die durch die die Messzelle passierenden Partikel verursachte Abschattung des Lichtstrahls erfasst werden. An der zweiten Detektoreinheit (Streulicht-Detektor) kann das durch die die Messzelle passierenden Partikel verursachte Streulicht erfasst werden. Der Partikelsensor ist insbesondere derart eingerichtet, dass eine gleichzeitige Durchführung des Lichtabschattungs-Messverfahrens und des Streulicht-Messverfahrens ermöglicht ist.

Eine einfache und schnelle Unterscheidbarkeit von Partikeln ist bei vielen Anwendungen von hoher Bedeutung. In Öl, Diesel oder Kerosin ist es wichtig, bspw. Wassertropfen und Luftblasen von anderen (festen) Partikeln (etwa Sand oder Metallpartikel) unterscheiden zu können. Im Trinkwasser ist es von hoher Bedeutung, bspw. Kryptosporidien, Kolibakterien (E.Coli) oder Öltröpfchen von anderen festen Partikeln (Sand, mineralische Partikel, Metallpartikel) unterscheiden zu können.

Der Partikelsensor kann ein Gehäuse aufweisen, in dem zumindest die Lichtquelle, die Messzelle (Durchflusszelle), die erste Detektoreinheit und die zweite Detektoreinheit angeordnet sind. Das flüssige oder gasförmige Medium dient als Trägermedium für ggf. darin enthaltene und zu erfassende Partikel. Als Trägermedium können alle Flüssigkeiten oder Gase dienen, die auf Partikelkontamination hin untersucht werden.

Im Rahmen einer bevorzugten Ausgestaltung kann eine weitere zweite Detektoreinheit zur Durchführung des Streulicht-Messverfahrens vorgesehen sein (weiterer Streulicht-Detektor). Auf diese Weise können gleichzeitig zwei Streulichtsignale erfasst werden. Hierdurch lassen sich weitere Informationen gewinnen oder gewonnene Informationen verifizieren. Die weitere zweite Detektoreinheit kann angewinkelt oder gegenüberliegend zu der zweiten Detektoreinheit (erster Streulicht-Detektor) angeordnet sein.

In vorteilhafter Weise kann die erste Detektoreinheit an der von der (ersten) Lichtquelle abgewandten Seite der Messzelle angeordnet sein, wobei die optische Achse die erste Detektoreinheit schneidet, insbesondere deren Erfassungsabschnitt (bspw. eine Fotodiode), und die zweite Detektoreinheit kann seitlich zur optischen Achse angeordnet sein und mit der optischen Achse einen Winkel (Raumwinkel) einschließen. Dadurch kann mit der ersten Detektoreinheit die Lichtabschattung entlang der optischen Achse erfasst werden, wobei durch die zweite Detektoreinheit seitlich Streulicht erfasst werden kann (ein Segment des in den Raum gestreuten Lichts). Die zweite Detektoreinheit, insbesondere deren Erfassungsabschnitt (Sensorelement, bspw. eine Fotodiode), kann mit der optischen Achse bspw. einen Winkel von 90° einschließen. Auch andere Winkel sind ebenfalls denkbar.

In zweckmäßiger Weise kann zwischen dem Partikelmessabschnitt und der oder den zweiten Detektoreinheiten jeweils eine vorzugweise einstellbare Blende angeordnet sein. Dadurch können zwei oder mehrere Bereiche des in den Raumwinkel gestreuten Lichtes (Streulicht) ausgewählt werden. Dies ermöglicht eine gezielte Untersuchung der Intensität (bspw. Verteilung von Minima und/oder Maxima) des Streulichts in definierten Bereichen. Die Blende kann als separate Komponente im Strahlengang zwischen Partikelmessabschnitt und zweiter Detektoreinheit angeordnet sein. Ebenso kann die Blende an einer der zweiten Detektoreinheit vorgeordneten Optik angeordnet sein. Hierbei kann es sich um eine Abbildungsoptik handeln, beispielsweise eine Abbildungsoptik mit asphärischen Linsen (axial kurze Baulänge). Bei der Blende kann es sich um eine einzelne Blende oder um mehrere Blendenabschnitte handeln, die in ihrer Gesamtheit eine Blende bilden.

Im Rahmen einer bevorzugten Ausgestaltung kann mindestens eine weitere Lichtquelle zur Erzeugung eines gebündelten und sich parallel zu oder entlang einer (ggf. weiteren) optischen Achse ausbreitenden Lichtstrahls zur Beleuchtung des Partikelmessabschnitts vorgesehen sein, wobei sich die Lichtstrahlen der weiteren Lichtquelle und der (ersten) Lichtquelle, insbesondere die Lichtstrahlen aller Lichtquellen, im Partikelmessabschnitt schneiden. Die Verwendung zweier oder mehrerer Lichtquellen führt zu einer zusätzlichen Dateninformation, wobei weitere Informationen gewonnen oder verifiziert werden können.

Die mindestens eine weitere Lichtquelle kann eine Wellenlänge aufweisen, die zur Wellenlänge der (ersten) Lichtquelle identisch ist oder von dieser abweicht. Die Detektion des Streulichts kann beim Durchgang eines Partikels erfolgen, und zwar entweder wenn beide Lichtquellen eingeschaltet sind oder wenn jeweils nur eine Lichtquelle eingeschaltet ist. Die Lichtquellen und der Partikelsensor können hierzu derart eingerichtet sein, dass die Lichtquellen gleichzeitig (Lichtquellen gleichzeitig eingeschaltet) oder wechselweise betrieben werden können. Hierzu müssen die Lichtquellen in sehr kurzer Zeit ein- und ausgeschaltet werden können (Ein- oder Ausschaltdauer kürzer als Durchlaufzeit eines Partikels im Partikelmessabschnitt). Denkbar ist bspw. die Verwendung zweier weiterer Lichtquellen.

Bspw. kann bei der Verwendung von zwei Lichtquellen mit gleicher Wellenlänge und bezogen auf den
Partikelmessabschnitt unterschiedlichen Beleuchtungswinkeln eine Verschiebung des Streulichts in den Raumwinkel erreicht werden.

Alternativ oder ergänzend kann die mindestens eine weitere Lichtquelle eine Wellenlänge aufweisen, die von der Wellenlänge der (ersten) Lichtquelle abweicht. Auch durch unterschiedliche Wellenlängen lassen sich weitere Informationen gewinnen und/oder gewonnene Informationen verifizieren. Durch den Einsatz von Lichtquellen mit zwei unterschiedlichen Wellenlängen verändert sich die Intensität des Streulichts über den Raumwinkel (Form der Streulichtkeule) in Abhängigkeit des Brechungsindexunterschieds von Trägermedium und Partikel. Dadurch lässt sich eine zusätzliche Information über die Materialeigenschaft der Partikel gewinnen. Bspw. kann die (erste) Lichtquelle eine Wellenlänge von 400 nm bis 780 nm (Nanometer) aufweisen und die zweite Lichtquelle eine Wellenlänge von mehr als 780 nm.

In vorteilhafter Weise kann die mindestens eine weitere Lichtquelle parallel zur (ersten) Lichtquelle angeordnet sein, so dass deren Lichtstrahlen zunächst parallel zueinander verlaufen und mittels einer Optik (Sammellinse; plankonvex) umgelenkt werden, so dass sich die Lichtstrahlen in dem Partikelmessabschnitt schneiden. Durch die parallele Anordnung der Lichtquellen ist eine zumindest in radialer Richtung kompakte Bauweise ermöglicht. Bei der Optik kann es sich um eine insbesondere plankonvexe Zylinderlinse handeln.

Im Rahmen einer bevorzugten Ausgestaltung kann die mindestens eine weitere Lichtquelle derart angeordnet sein, dass die (weitere) optische Achse der weiteren Lichtquelle und die optische Achse der (ersten) Lichtquelle miteinander einen Winkel von 2° bis 180° einschließen. Hiermit kann eine konstruktiv und optisch einfache Bauweise erzielt werden. Zusätzliche Optiken können vermieden werden. Eine direkte Einstrahlung auf den Partikelmessabschnitt der Messzelle ist möglich. Denkbar ist die Verwendung bspw. zwei weiterer Lichtquellen. Diese können bspw. jeweils einen Winkel von 25° oder 40° mit der optischen Achse der ersten Lichtquelle einschließen, wobei die zwei weiteren Lichtquellen zu zwei verschiedenen Seiten der optischen Achse angeordnet sein können.

In vorteilhafter Weise kann zumindest eine weitere Detektoreinheit zur Durchführung des Lichtabschattungs-Messverfahrens vorgesehen sein, vorzugsweise wobei die zumindest eine weitere Detektoreinheit der zumindest einen weiteren Lichtquelle derart gegenüber angeordnet ist, dass die optische Achse der zumindest einen weiteren Lichtquelle die zumindest eine weitere Detektoreinheit, insbesondere deren Erfassungsabschnitt (bspw. eine Fotodiode), schneidet. Durch die weitere Detektoreinheit lassen sich weitere Informationen gewinnen und/oder verifizieren. So kann die Lichtabschattung von mindestens einem weiteren und damit von insgesamt mindestens zwei Lichtquellen erfasst werden. Durch Ausschalten einer der Lichtquellen, bspw. der ersten Lichtquelle (Lichtquelle des Lichtblockade-Detektors), kann mit der weiteren Detektoreinheit auch das Streulicht der nicht zur weiteren Detektoreinheit gegenüberliegend angeordneten Lichtquelle erfasst werden.

Im Rahmen einer bevorzugten Ausgestaltung kann (im Strahlengang) zwischen der (ersten) Lichtquelle und dem Partikelmessabschnitt eine Strahlteilungseinrichtung angeordnet sein, insbesondere ein Strahlteiler (bspw. eine Strahlteilerplatte) oder ein optisches Gitter, und es kann eine weitere Detektoreinheit zur Erfassung von Fluoreszenzlicht vorgesehen sein (Fluoreszenz-Detektor). Auf diese Weise kann von Partikeln ausgesandtes Fluoreszenzlicht erfasst und ausgewertet werden. Hieraus lassen sich weitere Informationen gewinnen, da lediglich bestimmte Partikel fluoreszierend sind. Das von dem Partikelmessabschnitt zurück in Richtung der ersten Lichtquelle abgestrahlte Fluoreszenzlicht gelangt zum Strahlteiler oder zum optischen Gitter und wird von dort zur Detektoreinheit (Fluoreszenz-Detektor) umgelenkt. Der Fluoreszenz-Detektor schließt insbesondere einen Winkel mit der optischen Achse ein (angewinkelte Anordnung), bspw. kann der Fluoreszenz-Detektor rechtwinklig zur optischen Achse angeordnet sein.

Die Lichtquelle und/oder die weiteren Lichtquellen können jeweils als Laserlichtquelle ausgebildet sein, bspw. als Laserdiode. Optional kann an der Lichtquelle eine Kollimationsoptik zur Fokussierung des Lichtstrahls zwischen Lichtquelle und Messzelle angeordnet sein. Zwischen der Messzelle und der oder den zweiten Detektoreinheiten (Streulicht-Detektor) kann optional jeweils eine Abbildungsoptik angeordnet sein, die bspw. asphärische Linsen aufweist.
Die Detektoreinheit oder die Detektoreinheiten können als Sensorelement jeweils eine oder mehrere Fotodioden, eine Detektorzeile und/oder eine Auswerteelektronik aufweisen. Wie zuvor bereits beschrieben, kann der Partikelsensor ein Gehäuse aufweisen, in dem die Komponenten des Partikelsensors angeordnet sind, zumindest jedoch die Lichtquelle, die Messzelle, die erste Detektoreinheit und die zweite Detektoreinheit. Das Gehäuse des Partikelsensors kann aus Rohrabschnitten bestehen. Die Rohrabschnitte können geschwärzt und/oder miteinander verschraubbar ausgebildet sein. Der Partikelsensor ist derart eingerichtet, dass eine mehrfache Abtastung pro Partikeldurchlauf möglich ist. Dadurch können die Pulslänge, die Pulszeit und zumindest teilweise die Pulsform erfasst werden. Bspw. kann die Abtastrate ca. 2-10, 2-100, 2-1000, 2-10000 oder mehr Abtastungen pro Partikeldurchlauf aufweisen.

Insbesondere sollen folgende Partikel unterschieden werden können:
- Luftblasen oder Wassertröpfchen in Öl,
- Bakterien oder Algen in Kerosin, Diesel oder Heizöl,
- Bakterien (insbesondere E.Coli), Algen im Wasser oder Luftblasen im Wasser,
- Öltröpfchen im Wasser (insbesondere bei Reinigung von Schiffen darf kein Öl ins Meer gelangen) und
- längliche Partikel (Metallspäne: Länge und Durchmesser).

Die Erfindung wird im Folgenden anhand der Figuren näher erläutert, wobei gleiche oder funktional gleiche Elemente ggf. nur einmal mit Bezugszeichen versehen sind. Es zeigen in schematischen Ansichten:
- Fig.1: eine erste Ausführungsform des Partikelsensors mit einer ersten Detektoreinheit und einer zweiten Detektoreinheit;
- Figur 2: den Partikelsensor aus Figur 1 mit einer weiteren zweiten Detektoreinheit;
- Figur 3: eine Ausführung des Partikelsensors aus Figur 1 mit zwei weiteren Lichtquellen;
- Figur 4: den Partikelsensor aus Figur 3 mit zwei weiteren Detektoreinheiten;
- Figur 5: den Partikelsensor aus Figur 1 mit zwei Lichtquellen unterschiedlicher Wellenlänge;
- Figur 6: den Partikelsensor aus Figur 1 mit einer Strahlteilungseinrichtung und einer Detektoreinheit zur Erfassung von Fluoreszenzlicht;
- Figur 7: ein Beispiel eines zeitlichen Verlaufs einer Lichtabschattungs- und einer Fluoreszenzmessung;
- Figur 8: ein Beispiel eines zeitlichen Verlaufs einer Lichtabschattungs- und zweier Streulichtmessungen;
- Figur 9: einen zeitlichen Verlauf einer Lichtabschattungsmessung am Beispiel einer Latexkugel;
- Figur 10: einen zeitlichen Verlauf einer Lichtabschattungsmessung am Beispiel eines Wassertröpfchens; und
- Figur 11: einen Vergleich eines zeitlichen Verlaufs einer Lichtabschattungsmessung einer Alge mit einem Sandkorn.

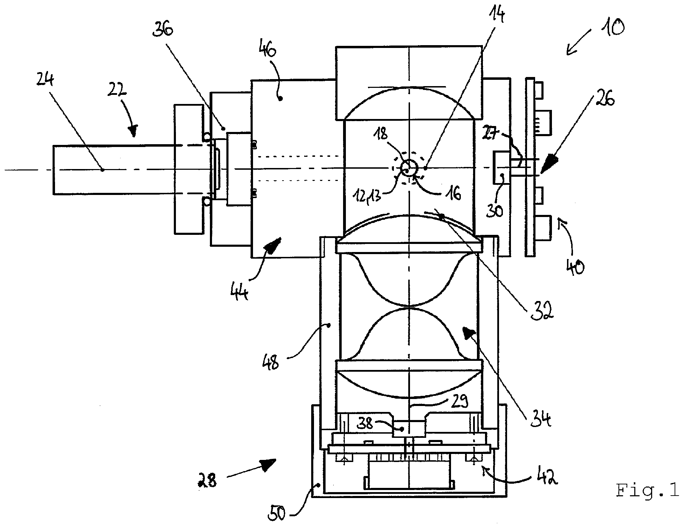

Figur 1 zeigt einen Partikelsensor, der insgesamt mit dem Bezugszeichen 10 bezeichnet ist. Der Partikelsensor 10 dient zur Detektion von Partikeln 12 in einem strömenden flüssigen oder gasförmigen Medium 13 (Fluid), das als Trägermedium für ggf. darin enthaltene Partikel 12 dient.

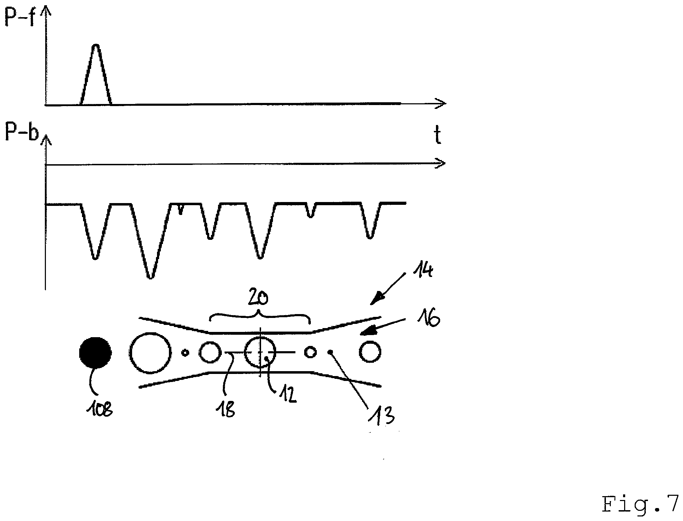

Der Partikelsensor 10 weist eine Messzelle 14 auf, die einen Strömungskanal 16 zur Durchführung des Mediums 13 aufweist. Die Mittellängsachse 18 des Strömungskanals 16 ragt senkrecht aus der Zeichenebene heraus. Der Strömungskanal 16 weist einen transparenten Partikelmessabschnitt 20 auf (siehe Figur 7). Der Partikelsensor 10 weist zudem eine Lichtquelle 22 zur Erzeugung eines gebündelten und sich entlang einer optischen Achse 24 ausbreitenden Lichtstrahls zur Beleuchtung des Partikelmessabschnitts 20 auf (siehe Figur 1) .

Weiter verfügt der Partikelsensor 10 über eine erste Detektoreinheit 26 zur Durchführung des Lichtabschattungs-Messverfahrens (Lichtblockade-Detektor) und eine zweite Detektoreinheit 28 zur Durchführung des Streulicht-Messverfahrens (Streulicht-Detektor).

Die erste Detektoreinheit 26 ist an der von der Lichtquelle 22 abgewandten Seite der Messzelle 14 angeordnet, wobei die optische Achse 24 die erste Detektoreinheit 26, insbesondere deren Sensorelement 30 (z.B. eine Fotodiode), schneidet. Die Detektorachse 27 der ersten Detektoreinheit 26 und die optische Achse 24 sind kongruent. Die zweite Detektoreinheit 28 ist seitlich zur optischen Achse 24 angeordnet und schließt mit der optischen Achse 24 einen Winkel ein, bspw. wie vorliegend einen Winkel von 90° zur optischen Achse 24. Die Detektorachse 29 der zweiten Detektoreinheit 28 und die optische Achse 24 stehen in einem Winkel von 90° zueinander und liegen in der Zeichenebene.

Zwischen dem Partikelmessabschnitt 20 und der zweiten Detektoreinheit 28 ist eine vorzugsweise einstellbare Blende 32 angeordnet. Die Blende 32 ist an einer der zweiten Detektoreinheit 28 vorgeordneten Optik 34 angeordnet. Die Optik 34 ist als Abbildungsoptik mit asphärischen Linsen ausgebildet. Die Blende 32 kann bspw. derart eingestellt sein, dass Streulicht im Bereich um die Detektorachse 29 erfasst wird, und zwar in etwa mittig zur Detektorachse 29. Nach Bedarf sind auch andere Einrichtungen der Blende 32 denkbar.

Die Lichtquelle 22 ist als Laserlichtquelle ausgebildet, bspw. als eine Laserdiode. Zudem ist an der Lichtquelle 22 eine Kollimationsoptik 36 zur Fokussierung des Lichtstrahls angeordnet. Die erste Detektoreinheit 26 und die zweite Detektoreinheit 28 weisen als Sensorelement 30, 38 jeweils eine Fotodiode sowie eine Auswerteelektronik 40, 42 auf.

Der Partikelsensor 10 weist ein Gehäuse 44 auf, in dem die Komponenten des Partikelsensors 10 angeordnet sind. Das Gehäuse 44 ist aus vorzugsweise rohrförmigen Abschnitten ausgebildet. Das Gehäuse 44 weist einen Mittenabschnitt 46 auf, in dem die Messzelle 14 angeordnet ist. Zudem weist das Gehäuse 44 einen Seitenabschnitt 48 auf, in dem die zweite Detektoreinheit 28 untergebracht ist. Der Seitenabschnitt 48 ist an dem Mittenabschnitt 46 befestigt, insbesondere verschraubt. Der Seitenabschnitt 48 weist endseitig einen Deckel 50 auf, der am Seitenabschnitt 48 befestigt, insbesondere verschraubt ist. So kann der Seitenabschnitt 48 ein Außengewinde und der Deckel 50 ein damit korrespondierendes Innengewinde aufweisen. Die Lichtquelle 22 und die erste Detektoreinheit 26 können mittels Gehäuseabschnitten, die am Mittenabschnitt 46 befestigt werden, verschlossen werden (nicht dargestellt).

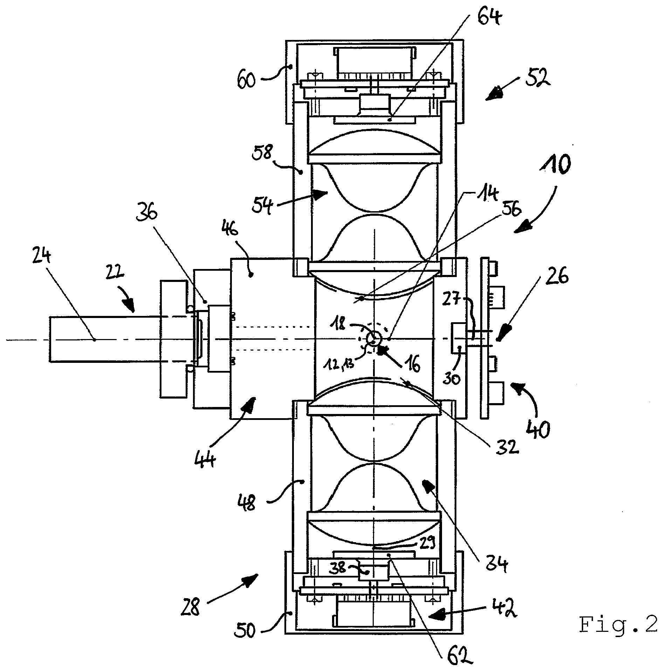

Figur 2 zeigt einen Partikelsensor 10, der weitestgehend dem voranstehend beschriebenen Partikelsensor 10 entspricht, so dass zur Vermeidung von Wiederholungen auf die dortigen Ausführungen verwiesen wird.

Ergänzend weist der Partikelsensor 10 eine weitere zweite Detektoreinheit 52 zur Durchführung des Streulicht-Messverfahrens auf (weiterer Streulicht-Detektor). Die weitere zweite Detektoreinheit 52 ist orthogonal zur optischen Achse 24 angeordnet (Winkel von 90° zwischen der Detektorachse der weiteren zweiten Detektoreinheit 52 und der optischen Achse 24). Die Detektorachse 29 der zweiten Detektoreinheit 28 und die Detektorachse der weiteren zweiten Detektoreinheit 52 sind kongruent zueinander. Mit anderen Worten liegt die weitere zweite Detektoreinheit 52 der zweiten Detektoreinheit 28 gegenüber.

Der weiteren zweiten Detektoreinheit 52 ist eine Optik 54 vorgeordnet, insbesondere eine Abbildungsoptik mit asphärischen Linsen. Zwischen dem Partikelmessabschnitt 20 und der weiteren zweiten Detektoreinheit 52 ist eine vorzugsweise einstellbare Blende 56 angeordnet. Die Blende 56 ist an der der weiteren zweiten Detektoreinheit 52 vorgeordneten Optik 54 angeordnet.

Das Gehäuse 44 weist einen weiteren Seitenabschnitt 58 auf, in dem die weitere zweite Detektoreinheit 52 untergebracht ist. Der weitere Seitenabschnitt 58 ist an dem Mittenabschnitt 46 befestigt, insbesondere verschraubt. Der weitere Seitenabschnitt 58 weist endseitig einen Deckel 60 auf, der am Seitenabschnitt 58 befestigt, insbesondere verschraubt, ist.
So kann der Seitenabschnitt 58 ein Außengewinde und der Deckel 50 ein damit korrespondierendes Innengewinde aufweisen.

Optional kann an den zweiten Detektoreinheiten 28, 52 jeweils ein Filter 62, 64 angeordnet sein, bspw. ein Wellenlängenfilter.

Die Blende 32 ist bspw. derart eingestellt, dass Streulicht im Bereich um die Detektorachse 29 in Vorwärtsrichtung (außermittig zur Detektorachse 29, der ersten Detektoreinheit 26 zugewandt) erfasst wird (Erfassung der Streulichtkeule in Vorwärtsrichtung). Die Blende 56 ist bspw. derart eingestellt, dass Streulicht im Bereich um die Detektorachse 29 in Rückwärtsrichtung (außermittig zur Detektorachse 29, der Lichtquelle 22 zugewandt) erfasst wird (Erfassung der Streulichtkeule in Rückwärtsrichtung). Die Anordnung der Blenden kann an die Messbedürfnisse angepasst werden.

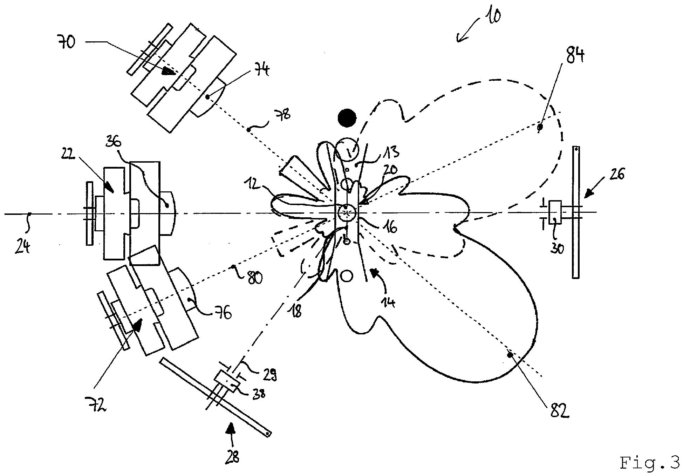

Figur 3 zeigt in einer schematischen Ansicht eine Ausgestaltung des Partikelsensors 10 aus Figur 1, wobei dieser zwei weitere Lichtquellen aufweist. Die Ansicht in Figur 3 ist gegenüber den Ansichten in Figur 1 und Figur 2 um 90° um die optische Achse 24 gedreht. Die Mittellängsachse 18 des Strömungskanals 16 liegt nunmehr in der Zeichenebene.

Die (erste) Lichtquelle 22, die erste Detektoreinheit 26 und die zweite Detektoreinheit 28 sind wie voranstehend beschrieben ausgebildet, so dass zur Vermeidung von Wiederholungen auf die voranstehenden Ausführungen verwiesen wird.

Vorliegend ist die zweite Detektoreinheit 28 in einem spitzen Winkel zur optischen Achse angeordnet (spitzer Winkel zwischen optischer Achse 24 und Detektorachse 29, bspw. ein Winkel von 55°). Zudem sind eine erste weitere Lichtquelle 70 und eine zweite weitere Lichtquelle 72 vorgesehen, die der (ersten) Lichtquelle 22 konstruktiv entsprechen. Die weiteren Lichtquellen 70, 72 weisen jeweils eine Kollimationsoptik 74, 76 auf.

Die weiteren Lichtquellen 70, 72 dienen jeweils zur Erzeugung eines gebündelten und sich entlang einer (weiteren) optischen Achse 78, 80 ausbreitenden Lichtstrahls zur Beleuchtung des Partikelmessabschnitts 20. Die Lichtstrahlen der weiteren Lichtquellen 70, 72 und der (ersten) Lichtquelle 22 schneiden sich im Partikelmessabschnitt 20. Die weiteren Lichtquellen 70, 72 sind derart angeordnet, dass die (weiteren) optischen Achsen 78, 80 und die optische Achse 24 der ersten Lichtquelle 22 miteinander einen Winkel einschließen. Die optische Achse 78 schließt mit der optischen Achse 24 einen Winkel von 40° ein. Die optische Achse 80 schließt mit der optischen Achse 24 einen Winkel von 20° ein.

Weiter sind in Figur 3 zwei Streulichtkeulen 82, 84 dargestellt, die die Intensität des Streulichtes über den Raumwinkel repräsentieren. Das Streulicht entsteht durch Auftreffen der Lichtstrahlen der weiteren Lichtquellen 70, 72 auf den sich im Partikelmessabschnitt 20 befindenden Partikel 12. Die Streulichtkeule 82 (durchgezogene Linie) entsteht durch Auftreffen des Lichtstrahls der Lichtquelle 70 (optische Achse 78) auf den Partikel 12. Die Streulichtkeule 84 (gestrichelte Linie) entsteht durch Auftreffen des Lichtstrahls der Lichtquelle 72 (optische Achse 80) auf den Partikel 12. Die sich durch Auftreffen des Lichtstrahls (optische Achse 24) der (ersten) Lichtquelle 22 ergebende Streulichtkeule ist aus Übersichtlichkeitsgründen nicht dargestellt.

Ist lediglich die erste Lichtquelle 22 eingeschaltet, erfasst die erste Detektoreinheit 26 die Lichtabschattung, die durch Auftreffen des Lichtstrahls der Lichtquelle 22 (optische Achse 24) entsteht. Die erste Detektoreinheit 26 arbeitet dann als Lichtblockade-Detektor.

Ist die erste Lichtquelle 22 ausgeschaltet und sind die erste weitere Lichtquelle 70 und/oder die zweite weitere Lichtquelle 72 eingeschaltet, erfasst die erste Detektoreinheit 26 das Streulicht, das durch Auftreffen der Lichtstrahlen auf den Partikel 12 entsteht und in Richtung der ersten Detektoreinheit 26 abstrahlt. Die erste Detektoreinheit 26 kann dann als Streulicht-Detektor arbeiten.
Unabhängig davon, welche der Lichtquellen 22, 70 oder 72 eingeschaltet ist, erfasst die zweite Detektoreinheit 28 stets das sich durch Auftreffen der jeweiligen Lichtstrahlen auf den Partikel 12 ergebende und in Richtung der zweiten Detektoreinheit 28 abstrahlende Streulicht. Für eine möglichst flexible Auswertung ist es von Vorteil, wenn der Partikelsensor 10 derart ausgebildet ist, dass die Lichtquellen 22, 70 oder 72 gemeinsam und/oder wechselweise ein- und ausschaltbar sind.

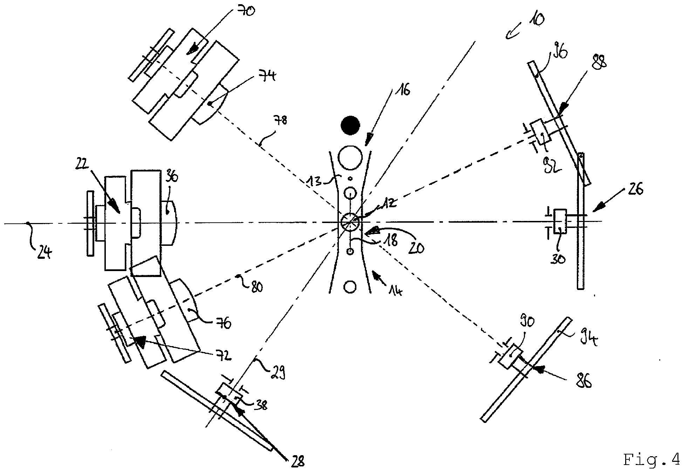

Figur 4 zeigt eine Ausgestaltung des Partikelsensors 10 aus Figur 3, wobei dieser zusätzlich zwei weitere Detektoreinheiten 86, 88 zur Durchführung des Lichtabschattungs-Messverfahrens aufweist. Die Detektoreinheiten 86, 88 entsprechen konstruktiv der ersten Detektoreinheit 26 und weisen jeweils ein Sensorelement 90, 92 (bspw. eine Fotodiode) und eine Auswerteelektronik 94, 96 auf.

Die erste weitere Detektoreinheit 86 ist der ersten weiteren Lichtquelle 70 derart gegenüber angeordnet, dass die optische Achse 78 der ersten weiteren Lichtquelle 70 die erste weitere Detektoreinheit 86, insbesondere deren Sensorelement 90, schneidet. Die zweite weitere Detektoreinheit 88 ist der zweiten weiteren Lichtquelle 72 derart gegenüber angeordnet, dass die optische Achse 80 der zweiten weiteren Lichtquelle 72 die erste weitere Detektoreinheit 88, insbesondere deren Sensorelement 92, schneidet.

Sind die Lichtquelle 22 und die weiteren Lichtquellen 70, 72 eingeschaltet, kann mittels der ersten Detektoreinheit 26 und den weiteren Detektoreinheiten 86, 88 die durch Auftreffen der Lichtstrahlen am Partikel 12 entstehende Lichtabschattung, insbesondere gleichzeitig, erfasst werden. Die Detektoreinheiten 26, 86 und 88 arbeiten dann als Lichtblockade-Sensoren. Die zweite Detektoreinheit 28 erfasst das durch Auftreffen der Lichtstrahlen auf den Partikel 12 entstehende und in Richtung der zweiten Detektoreinheit 28 (optische Achse 29) abstrahlende Streulicht.

Ist die einem der Detektoreinheiten 26, 86 und 88 gegenüberliegende Lichtquelle ausgeschaltet, bspw. die Lichtquelle 22, so kann durch diese Detektoreinheit, bspw. die erste Detektoreinheit 26, das Streulicht einer eingeschalteten versetzten Lichtquelle erfassen, bspw. einer oder beider der weiteren Lichtquellen 70, 72.

Die Detektoreinheiten 86, 88 können auch abseits der Achsen 78, 80 positioniert sein, bspw. einen Winkel mit den Achsen 78, 80 einschließen, und als reine Streulicht-Detektoren eingesetzt werden. Hierzu können die Detektoreinheiten 86, 88 in Figur 4 bspw. in einem Raumwinkel von 10° bis 50° in der Blattebene oder senkrecht zur Blattebene verschwenkt sein (Verschwenken um den Schnittpunkt der Achsen 78, 80). Hiermit wäre eine elektronische Ansteuerung der Lichtquellen 22, 70 und 72 erleichtert, da diese dann, wenn an den Detektoreinheiten 86, 88 Streulicht erfasst werden soll, nicht ausgeschaltet, bspw. intermittierend ausgeschaltet werden müssten.

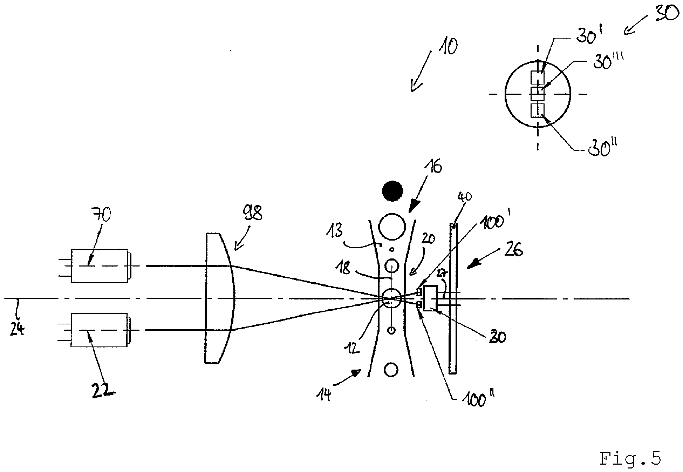

Figur 5 zeigt eine Ausgestaltung des Partikelsensors 10 aus Figur 1. Dabei ist die erste Lichtquelle 22 parallel zur optischen Achse 24 angeordnet, so dass sich der gebündelte Lichtstrahl zur Beleuchtung des Partikelmessabschnitts 20 zunächst parallel zu der optischen Achse 24 ausbreitet. Der Partikelsensor 10 weist eine weitere Lichtquelle 70 zur Erzeugung eines gebündelten und sich zunächst parallel zu der optischen Achse 24 ausbreitenden Lichtstrahls zur Beleuchtung des Partikelmessabschnitts 20 auf.

Die Wellenlängen der Lichtquelle 22 und der weiteren Lichtquelle 70 weichen voneinander ab. So weist die erste Lichtquelle 22 eine erste Wellenlänge, bspw. eine Wellenlänge im Bereich von 400nm bis 780nm (Nanometer), und die zweite Lichtquelle 70 eine zweite, insbesondere eine höhere, Wellenlänge auf, bspw. eine Wellenlänge größer als 780nm. Durch die unterschiedlichen Wellenlängen entsteht unterschiedliches Streulicht, aus dem weitere Informationen gewonnen werden können.

Die weitere Lichtquelle 70 ist parallel zur ersten Lichtquelle 22 angeordnet, so dass deren Lichtstrahlen zunächst parallel zueinander verlaufen. Die Lichtstrahlen werden dann mit einer Optik 98, insbesondere einer plankonvexen Zylinderlinse, umgelenkt, so dass sich die Lichtstrahlen in dem Partikelmessabschnitt 20 schneiden.

Die erste Detektoreinheit 26 (Lichtblockade-Detektor) weist drei Sensorelemente 30 auf (z.B. drei Fotodioden). Das insbesondere mittig angeordnete Sensorelement 30"' detektiert das Licht bzw. die Lichtabschattung beider Lichtquellen 22, 70. Dem Sensorelement 30', 30" ist jeweils ein Filter 100', 100" (Wellenlängenfilter) vorgeschaltet. Dadurch detektiert das Sensorelement 30' lediglich das Licht bzw. die Lichtabschattung der ersten Lichtquelle 22. Das Sensorelement 30" detektiert lediglich das Licht bzw. die Lichtabschattung der weiteren Lichtquelle 70.

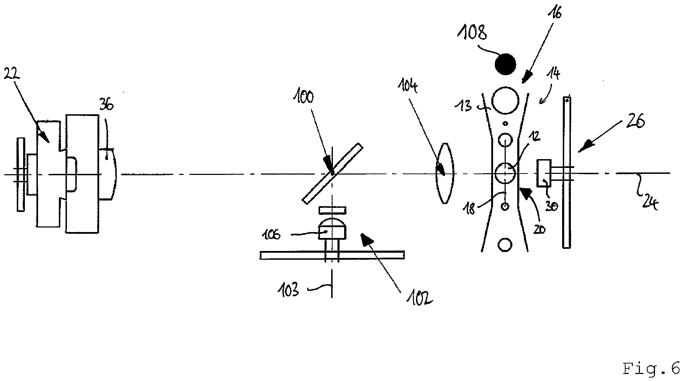

Figur 6 zeigt eine Ausgestaltung des Partikelsensors 10 aus Figur 1. Dabei ist im Strahlengang zwischen der ersten Lichtquelle 22 und dem Partikelmessabschnitt 20 eine Strahlteilungseinrichtung 100 angeordnet, die als Strahlteiler (Strahlteilerplatte) ausgebildet sein kann. Zudem ist eine weitere Detektoreinheit 102 zur Detektion von Fluoreszenzlicht vorgesehen. Die weitere Detektoreinheit 102 kann als Sensorelement 106 eine Fotodiode aufweisen. Die weitere Detektoreinheit 102 ist seitlich zur optischen Achse 24 angebracht, bspw. mit einem Winkel von 90° zwischen der Detektorachse 103 und der optischen Achse 24. Im Strahlengang zwischen der Strahlteilungseinrichtung 100 und dem Partikelmessabschnitt 20 ist optional eine Kollimationsoptik 104 angeordnet. Die Strahlteilungseinrichtung 100 lässt die sich von der Lichtquelle 22 in Richtung der Messzelle 14 ausbreitenden Lichtstrahlen (Beleuchtungslicht) passieren, so dass diese die Messzelle 14 bzw. den Partikelmessabschnitt 20 beleuchten. Das Fluoreszenzlicht eines fluoreszierenden Partikels 108, welches in Richtung der Lichtquelle 22 abgegeben wird, wird von der Strahlteilungseinrichtung 100 auf die weitere Detektoreinheit 102 umgelenkt. Die zusätzliche Erfassung des Fluoreszenzlichtes lässt Partikel erkennen, die eine Eigenfluoreszenz haben(z.B. Kryptosporidien, E.Coli).

Die Strahlteilungseinrichtung 100 kann alternativ als optisches Gitter ausgebildet sein. Die weitere Detektoreinheit 102 kann als Sensorelement 106 alternativ eine Detektorzeile aufweisen. Hiermit ist es möglich, mehrere Wellenlängen des Fluoreszenzlichtes gleichzeitig auszuwerten. Das Fluoreszenzlicht wird mithilfe der als optisches Gitter ausgebildeten Strahlteilungseinrichtung 100 und dem als Detektorzeile ausgebildeten Sensorelement 106 in verschiedene spektrale Farben zerlegt.

Figur 7 zeigt in einer vergrößerten Ansicht die Messzelle 14 mit den Strömungskanal 16 durchlaufenden Partikeln sowie eine Darstellung der Detektionsausgangssignale, dargestellt über der Zeit t, beim Durchlauf der dargestellten Partikel durch die Messzelle 14 (Detektionsausgangssignale entsprechen den darunter dargestellten Partikeln). Eine solche Erfassung kann bspw. mit dem Partikelsensor 10 gemäß Figur 6 erfolgen.
Das Diagramm P-b veranschaulicht die durch die erste Detektoreinheit 26 (Lichtblockade-Detektor) detektierte Lichtintensität bzw. die detektierte Lichtabschattung beim Durchlauf der Partikel. Die Intensität der Lichtabschattung (Pulslänge in t-Richtung sowie Pulshöhe entlang der Ordinate) hängt in erster Linie von der Größe des detektierten Partikels ab.

Das Diagramm P-f veranschaulicht die durch die weitere Detektoreinheit 102 (Fluoreszenz-Detektor) detektierte Lichtintensität eines fluoreszierenden Partikels 108. Anhand der durch die erste Detektoreinheit 26 detektierten Lichtabschattung (Diagramm P-b) können der (nicht fluoreszierende) Partikel 12 und der fluoreszierende Partikel 108 kaum voneinander unterschieden werden. Durch das detektierte Fluoreszenzlicht (Diagramm P-f) lässt sich jedoch erkennen, dass es sich bei dem Partikel 108 um einen fluoreszierenden Partikel handelt (z.B. Kryptosporidien, E.Coli).

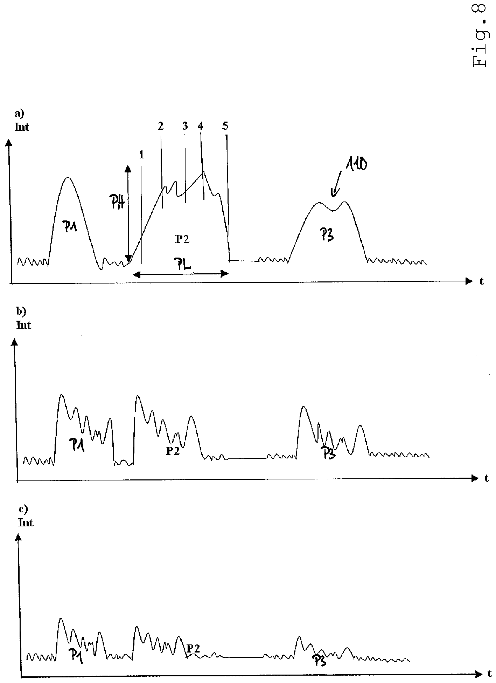

Figur 8 zeigt einen beispielhaften Verlauf detektierter Lichtintensitäten, welche mit dem Partikelsensor 10 aus Figur 2 (ein Lichtblockadedetektor 26 und zwei Streulicht-Detektoren 28, 52) erfasst werden können.

Darstellung a) (oberstes Schaubild) zeigt den zeitlichen Verlauf der durch die erste Detektoreinheit 26 (Lichtblockade-Detektor) detektierten Lichtintensität bzw. der detektierten Lichtabschattung beim Durchlauf der Partikel (in invertierter Darstellung). Darstellung b) (mittleres Schaubild) zeigt den zeitlichen Verlauf der durch die zweite Detektoreinheit 28 (Streulicht-Detektor) detektieren Lichtintensität beim Durchlauf der Partikel (erfasstes Streulicht in Vorwärtsrichtung; vgl. Figur 2). Darstellung c) (unteres Schaubild) zeigt den zeitlichen Verlauf der durch die weitere zweite Detektoreinheit 52 (Streulicht-Detektor) diktierten Lichtintensität beim Durchlauf der Partikel (erfasstes Streulicht in Rückwärtsrichtung; vgl. Figur 2).

Um die Pulslänge, die Pulszeit und zumindest teilweise auch die Pulsform erfassen zu können, werden die Lichtintensitäten beim Durchlauf eines Partikels mehrfach abgetastet. Vorliegend ist die Abtastrate bspw. derart gewählt, dass beim Durchlauf eines zweiten Partikels (dargestellt durch den Puls P2) insgesamt fünf Abtastungen erfolgen (gekennzeichnet durch die Ziffern 1-5 in Darstellung a)). Dadurch lässt sich nicht nur auf die Größe, sondern auch auf die Art des Partikels schließen. Die Pulshöhe PH und die Pulslänge PL des Pulses P2 sind in Darstellung a) eingezeichnet. Zur besseren Auflösung des Verlaufs sind auch höhere Abtastraten denkbar, bspw. kann eine Abtastung auch 100 mal pro Puls erfolgen.

Bei der Erfassung des Streulichts (Darstellungen b) und c)) ist der Abstand der Minima und Maxima sowie der Verlauf der Streulichtintensität abhängig von der Partikelgröße, der Partikelform, des Brechungsindexes des Partikels sowie der Wellenlänge der Lichtquelle, bspw. der Lichtquelle 22 in Figur 2.

Die Darstellungen a) bis c) zeigen den Verlauf von Lichtintensitäten (Pulse) folgender Partikel: Der Puls P1 zeigt den Puls eines kugelförmigen schwarzen Partikels (parabelähnlicher Verlauf der vom Lichtblockade-Detektor erfassten Intensität in Darstellung a)). Der Puls P2 zeigt ein Sandkorn mit unregelmäßiger Geometrie (gezackter Verlauf der vom Lichtblockade-Detektor erfassten Intensität in Darstellung a)). Der Puls P3 zeigt einen transparenten Latexpartikel (bspw. E.Coli oder Bakterium). Hier lässt sich ein Mikrolinsen-Effekt 110 erkennen, da der transparente Latexpartikel beim Durchlauf durch den Partikelmessabschnitt 20 Licht teilweise hindurchlässt.

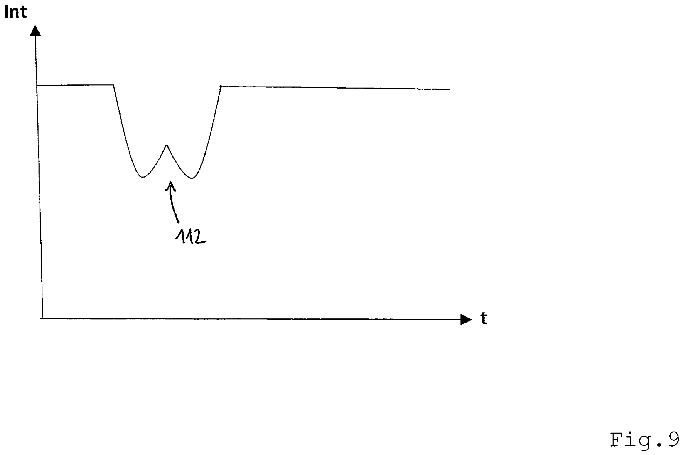

Durch den zeitlichen Verlauf des Lichtblockadesignals bzw. des Streulichtsignals lassen sich zusätzliche Informationen zu Partikelform oder Materialeigenschaft der Partikel bestimmen. Dies ist anhand nachfolgender Beispiele veranschaulicht:Figur 9 zeigt schematisch einen zeitlichen Verlauf einer Lichtabschattungsmessung (Intensitätssignal Int) am Beispiel einer Latexkugel (Lichtblockadesignal nicht invertiert). Eine Latexkugel wirkt wie eine Mikrolinse im Strahlengang. Befindet sich die Kugel im Partikelmessabschnitt (in der Mitte des Strahlengangs), wird kurzfristig wieder mehr Licht auf den Lichtblockade-Detektor gebracht (siehe Pfeil 112). Entsprechendes gilt für Öl-Tröpfchen im Wasser sowie für Luftblasen im Öl oder im Wasser.

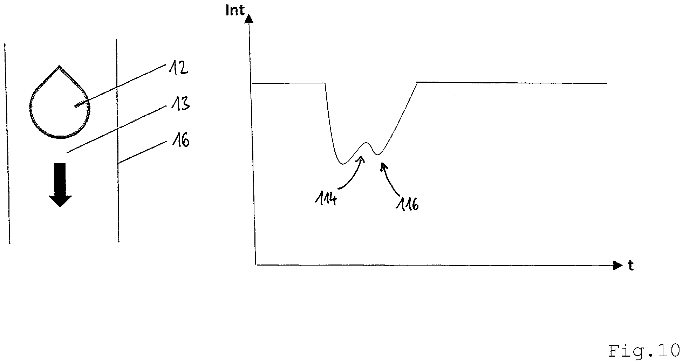

Figur 10 zeigt schematisch einen zeitlichen Verlauf einer Lichtabschattungsmessung am Beispiel eines Wassertröpfchens (Lichtblockadesignal nicht invertiert). Die Erfassung von Wassertröpfchen im Öl bzw. in Kerosin ist vor allem im Bereich der Flugzeugindustrie von Bedeutung. Durch die Verformung der Wassertröpfchen (Partikel 12) im Trägermedium 13 (Öl) im Strömungskanal 16 werden ganz spezielle Signalformen generiert. Der Signalverlauf sieht zunächst ähnlich wie ein Mikrolinseneffekt aus (Pfeil 114). Durch die Tropfenform des Partikels 12 (Durchmesserreduktion am tropfenförmigen Ende), die mehr Licht passieren lässt, ist die auf den Mikrolinseneffekt folgende Lichtabschattung geringer (Pfeil 116). Ein ähnliches Signal ist für Öl-Tröpfchen im Wasser zu erwarten (wichtig bei der Reinigung von Öltanks von Schiffen).

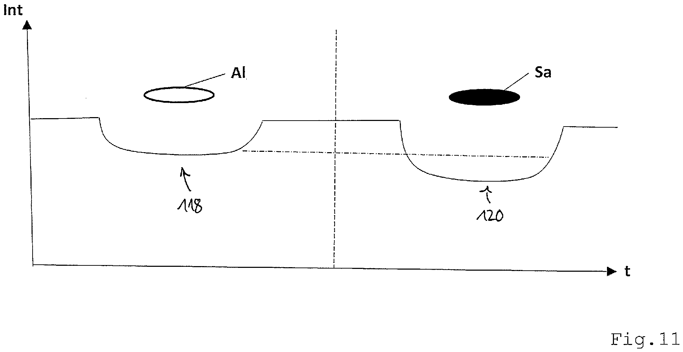

Figur 11 zeigt schematisch einen Vergleich eines zeitlichen Verlaufs einer Lichtabschattungsmessung einer Alge mit einem Sandkorn (Lichtblockadesignal nicht invertiert). Anhand dieses Vergleichs lässt sich erkennen, dass die Alge Al und das Sandkorn Sa zwar eine gleiche Partikelform, jedoch unterschiedliche Pulshöhen aufweisen. So ist die Lichtabschattung beim Sandkorn Sa größer (Pfeil 120) als die Lichtabschattung der Alge Al (Pfeil 118). Dies beruht darauf, dass das Sandkorn Sa als Festkörper quasi aus Vollmaterial besteht und daher mehr Licht abschattet.
Bei der Alge Al handelt es sich um einen Partikel mit einer Hülle und darin enthaltenen stärker lichtdurchlässigen Bestandteilen. Die Pulshöhe eines Intensitätssignals Int von Algen oder E.Colis ist geringer als das eines Sandkorns oder eines Metallspans. Algen, E.Colis und/oder Proteine blockieren nur einen Teil des Lichts, das auf den jeweiligen Partikel trifft. Sie sind teildurchlässig oder wirken wie eine Linse, bspw. wie eine Zylinderlinse im Lichtstrahl.

## Patentansprüche

1. Partikelsensor (10) zur Detektion von Partikeln (12, 108) in einem strömenden flüssigen oder gasförmigem Medium (13), mit einer Messzelle (14), die einen Strömungskanal (161) zur Durchführung des Mediums (13) mit einem zumindest teilweise transparenten Partikelmessabschnitt (20) aufweist, und einer Lichtquelle (22) zur Erzeugung eines gebündelten und sich parallel zu oder entlang einer optischen Achse (24) ausbreitenden Lichtstrahls zur Beleuchtung des Partikelmessabschnitts (20), **dadurch gekennzeichnet, dass** eine erste Detektoreinheit (26) zur Durchführung des Lichtabschattungs-Messverfahrens und eine zweite Detektoreinheit (28) zur Durchführung des Streulicht-Messverfahrens vorgesehen sind.

2. Partikelsensor (10) nach Anspruch 1, **dadurch gekennzeichnet, dass** eine weitere zweite Detektoreinheit (52) zur Durchführung des Streulicht-Messverfahrens vorgesehen ist.

3. Partikelsensor (10) nach Anspruch 1 oder 2, **dadurch gekennzeichnet, dass** die erste Detektoreinheit (26) an der von der Lichtquelle (22) abgewandten Seite der Messzelle (14) angeordnet ist, wobei die optische Achse (24) die erste Detektoreinheit (26) schneidet, und dass die zweite Detektoreinheit (28) oder die zweiten Detektoreinheiten (28, 52) seitlich zur optischen Achse (24) angeordnet ist/sind und mit der optischen Achse (24) einen Winkel einschließt/einschließen.

4. Partikelsensor (10) nach einem der voranstehenden Ansprüche, **dadurch gekennzeichnet, dass** zwischen dem Partikelmessabschnitt (20) und der oder den zweiten Detektoreinheiten (28, 52) jeweils eine vorzugweise einstellbare Blende (32, 56) angeordnet ist.

5. Partikelsensor (10) nach einem der voranstehenden Ansprüche, **dadurch gekennzeichnet, dass** mindestens eine weitere Lichtquelle (70, 72) zur Erzeugung eines gebündelten und sich parallel zu oder entlang einer optischen Achse (78, 80) ausbreitenden Lichtstrahls zur Beleuchtung des Partikelmessabschnitts (20) vorgesehen ist, wobei sich die Lichtstrahlen der weiteren Lichtquelle (70, 72) und der Lichtquelle (22), insbesondere die Lichtstrahlen aller Lichtquellen (22, 70, 72), im Partikelmessabschnitt (20) schneiden.

6. Partikelsensor (10) nach Anspruch 5, **dadurch gekennzeichnet, dass** die mindestens eine weitere Lichtquelle (70, 72) eine Wellenlänge aufweist, die von der Wellenlänge der Lichtquelle (22) abweicht.

7. Partikelsensor (10) nach Anspruch 5 oder 6, **dadurch gekennzeichnet, dass** die mindestens eine weitere Lichtquelle (70) parallel zur Lichtquelle (22) angeordnet ist, so dass deren Lichtstrahlen zunächst parallel zueinander verlaufen und mittels einer Optik (98) umgelenkt werden, so dass sich die Lichtstrahlen in dem Partikelmessabschnitt (20) schneiden.

8. Partikelsensor (10) nach einem der Ansprüche 5 bis 7, **dadurch gekennzeichnet, dass** die mindestens eine weitere Lichtquelle (70, 72) derart angeordnet ist, dass die optische Achse (78, 80) der weiteren Lichtquelle (70, 72) und die optische Achse (24) der Lichtquelle (22) miteinander einen Winkel von 2° bis 180° einschließen.

9. Partikelsensor (10) nach einem der voranstehenden Ansprüche, **dadurch gekennzeichnet, dass** zumindest eine weitere Detektoreinheit (86, 88) zur Durchführung des Lichtabschattungs-Messverfahrens vorgesehen ist, vorzugsweise wobei die zumindest eine weitere Detektoreinheit (86, 88) der zumindest einen weiteren Lichtquelle (70, 72) derart gegenüber angeordnet ist, dass die optische Achse (78, 80) der zumindest einen weiteren Lichtquelle (70, 72) die zumindest eine weitere Detektoreinheit (86, 88) schneidet.

10. Partikelsensor (10) nach einem der voranstehenden Ansprüche, **dadurch gekennzeichnet, dass** zwischen der Lichtquelle (22) und dem Partikelmessabschnitt (20) eine Strahlteilungseinrichtung (100) angeordnet ist und eine weitere Detektoreinheit (102) zur Erfassung von Fluoreszenzlicht vorgesehen ist.
